# EUROPEAN PATENT SPECIFICATION

(11) **EP 3 125 367 B1**
(45) Date of publication and mention of the grant of the patent: **31.07.2019**
(21) Application number: 15785998.4
(22) Date of filing: 21.04.2015
(51) Int. Cl.: H04B 5/00

(54) **ANTENNA DEVICE AND ELECTRONIC DEVICE**
ANTENNENVORRICHTUNG UND ELEKTRONISCHE VORRICHTUNG
DISPOSITIF ANTENNE ET DISPOSITIF ÉLECTRONIQUE

(30) Priority: 30.04.2014 JP 2014093324
(43) Date of publication of application: 01.02.2017
(73) Proprietor: Murata Manufacturing Co., Ltd., Nagaokakyo-shi, Kyoto 617-8555 (JP)
(72) Inventor: ITO, Hiromitsu, Nagaokakyo-shi Kyoto 617-8555 (JP)
(74) Representative: Zimmermann, Tankred Klaus
(86) International application number: PCT/JP2015/062037
(87) International publication number: WO 2015/166834

(56) References cited:
- WO-A1-2013/042604
- WO-A1-2014/003163
- JP-A- H08 195 618
- JP-B2- 5 246 764
- JP-B2- 5 403 146

## Description

### Technical Field

The present invention relates to an antenna device used in a near field radio communication system or the like and to an electronic apparatus including it.

### Background Art

In radio frequency identification (RFID) of 13.56 MHz range, such as near field communication (NFC), mounted on a portable terminal, typically, an integrated circuit (IC) chip for RFID and matching element are mainly mounted on a circuit board, an antenna is attached to an inner surface of a terminal housing made of resin, and the IC chip for RFID and antenna are connected to each other with a spring pin or the like interposed therebetween in a direct current manner.

Recently, wireless communication devices, such as cellular phone terminals, have become thinner and thinner, and the use of metals in a wide area of a housing has increased to solve a shortage of strength created by the reduction in thickness. However, the metallic portion in the housing shields an antenna incorporated in the terminal, and this causes the problem that communication with a device on a partner side is not established.

Thus, as in Patent Document 1, there is proposed an antenna device having a structure in which a metal plate with a wider area than an antenna coil is placed in the vicinity of (magnetic-field coupled to) the antenna coil and the metal plate is used as a radiator.

### Citation List

### Patent Document

Patent Document 1: Japanese Unexamined Patent Application Publication No. 2011-97657

WO 2014/003163 A1 discloses an antenna device including a first conductor plane and a second conductor plane that face each other. The first conductor plane and the second conductor plane are electrically continuous through a first connection conductor, a second connection conductor, and a chip capacitor. A power feed coil is disposed between the first conductor plane and the second conductor plane. The power feed coil is composed of a magnetic core and a coil conductor. The coil conductor forms a pattern such that the coil conductor winds around the magnetic core. This power feed coil is disposed at a position closer to the first connection conductor and magnetically couples with the first connection conductor.

### Summary of Invention

### Technical Problem

Problems to be solved in the antenna device illustrated in Patent Document 1 are described below.

The antenna device described in Patent Document 1 includes a coil conductor and a conductive member magnetic-field coupled to the coil conductor. The conductive member has a conductor aperture and a slit extending from the conductor aperture to an edge portion of the conductive member. The coil conductor is arranged such that its coil aperture portion overlaps the conductor aperture in the conductive member. When a current flows through the coil conductor, a current flows through an outer edge portion of the conductive member in the same direction as that of the current flowing through the coil conductor, whereas a current flows through the peripheral area (inner edge) of the conductor aperture in the vicinity of the coil conductor in a direction opposite to that of the current flowing through the coil conductor. The presence of the area where the current flows in the opposite direction leads to a reduced inductance of the antenna, and this causes the problem that the communication characteristics degrade. In addition, the strength of an induced current largely varies depending on variations in the position where the coil conductor and conductive member are attached and in the distance between the coil conductor and conductive member when they are attached, and thus there is a problem in that the inductance value tends to vary.

It is an object of the present invention to provide an antenna device including an antenna device capable of solving the problems of decreases and variations in inductance of the antenna device as viewed from a feeder circuit and capable of suppressing degradation and variations in communication characteristics. Solution to Problem

An antenna device in the present invention includes a conductive member, a wiring substrate including a coupling line having conductivity, a connecting conductor electrically connecting the conductive member and the coupling line, and a feeding coil disposed on the wiring substrate and magnetic-field coupled to the coupling line. At least the conductive member, the coupling line, and the connecting conductor form a current path.

An electronic apparatus in the present invention includes an antenna device. The antenna device includes a conductive member, a wiring substrate including a coupling line having conductivity, a connecting conductor electrically connecting the conductive member and the coupling line, and a feeding coil disposed on the wiring substrate and magnetic-field coupled to the coupling line. At least the conductive member, the coupling line, and the connecting conductor form a current path.

### Advantageous Effects of Invention

According to the present invention, decreases and variations in inductance of the antenna device as viewed from the feeder circuit are small, and degradation and variations in communication characteristics can be suppressed.

### Brief Description of Drawings

Fig. 1 is a perspective view of an antenna device 101A according to a first embodiment.
Fig. 2 is a partial plan view that illustrates a conductive pattern in a location where a feeding coil 4 is mounted on a wiring substrate 2.
Fig. 3 is an exploded perspective view that illustrates a configuration of the feeding coil 4.
Fig. 4 is a perspective view of another antenna device 101B according to the first embodiment.
Fig. 5 is a perspective view of yet another antenna device 101C according to the first embodiment.
Fig. 6 is a perspective view of still another antenna device 101D according to the first embodiment.
Fig. 7 is a perspective view of an antenna device 102A according to a second embodiment.
Fig. 8 is a perspective view of another antenna device 102B according to the second embodiment.
Fig. 9 is a perspective view of an antenna device 103 according to a third embodiment.
Fig. 10 is a perspective view of an antenna device 104 according to a fourth embodiment.
Fig. 11(A) is a perspective view of an antenna device 105 according to a fifth embodiment, and Fig. 11(B) is a front view of the antenna device 105.
Fig. 12 is a perspective view of an antenna device 106 according to a sixth embodiment.
Fig. 13 is a perspective view of an antenna device 107 according to a seventh embodiment.
Fig. 14 is a partial perspective view of an antenna device 108A according to an eighth embodiment.
Fig. 15 is a partial perspective view of another antenna device 108B according to the eighth embodiment.
Fig. 16 illustrates a structure of an inner portion of a housing in a wireless communication apparatus 201 according to a ninth embodiment and is a plan view in a state where a lower housing 10 and upper housing 20 are separated and the inside is exposed.

### Description of Embodiments

A plurality of embodiments for carrying out the present invention are described below by using some specific examples with reference to the drawings. The same reference numerals are used in the same locations in the drawings. The embodiments are illustrative, and configurations illustrated in different embodiments may be partially replaced or combined. In and after a second embodiment, description of matters common to a first embodiment is omitted, and different points are described. In particular, substantially the same operational advantages derived from substantially the same configuration are not explained in detail in each embodiment.

### <<First Embodiment>>

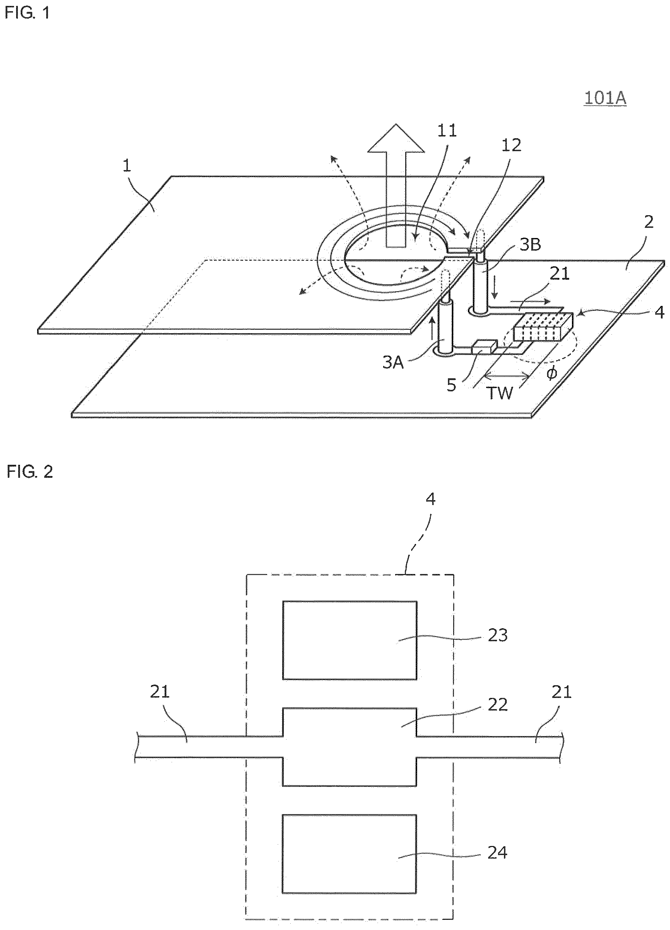

Fig. 1 is a perspective view of an antenna device 101A included in a portable electronic apparatus or the like according to a first embodiment. The antenna device 101 includes a conductive member 1 and a wiring substrate 2. A coupling line 21 having conductivity is disposed on the wiring substrate 2. The conductive member 1 and coupling line 21 are electrically connected to each other with connecting conductors 3A and 3B interposed therebetween. One example of each of the connecting conductors 3A and 3B may be a spring pin.

A feeding coil 4 magnetic-field coupled to the coupling line 21 is mounted on the wiring substrate 2. The wiring substrate 2 is connected to a chip capacitor 5 connected in series to the coupling line 21. In the present embodiment, the capacitor connected to the coupling line 21 is a chip capacitor. It may be replaced with another type of capacitor, such as a lead capacitor.

The conductive member 1 has a cut portion defined by a conductor aperture 11 and a slit 12. The connecting conductors 3A and 3B are connected to locations between which the cut portion (in particular the slit 12 in the example illustrated in Fig. 1) is positioned.

Fig. 2 is a partial plan view that illustrates a conductive pattern in a location where the feeding coil 4 is mounted on the wiring substrate 2. A part of the coupling line 21 is formed as a terminal 22. Terminals 23 and 24 are formed on opposite sides of the terminal 22 portion in the coupling line 21 (opposite sides between which the coupling line 21 is positioned). As described below, the feeding coil 4 includes three terminals on the surface on which it is mounted, and these three terminals are connected to the terminals 22, 23, and 24 of the wiring substrate 2.

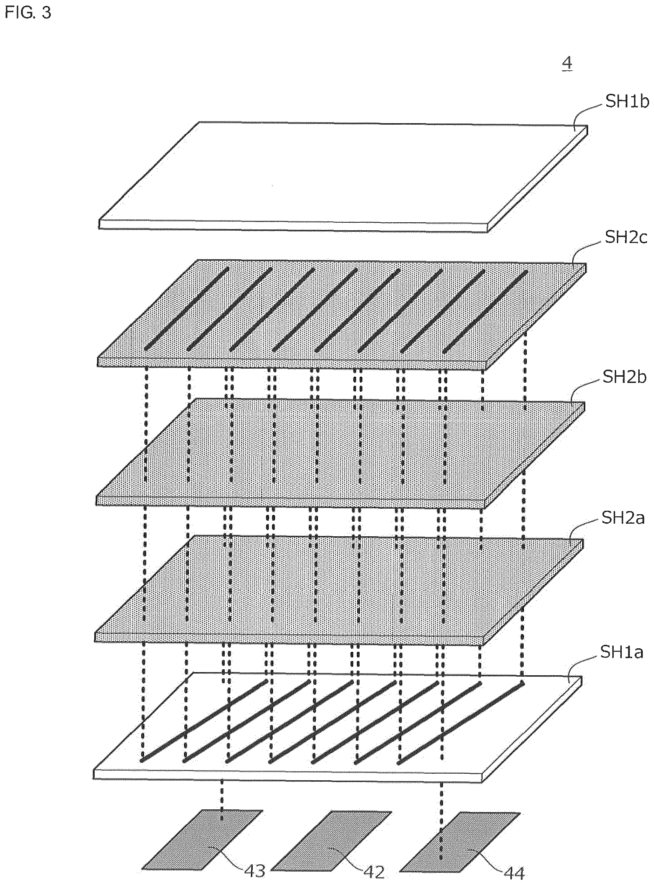

Fig. 3 is an exploded perspective view that illustrates a configuration of the feeding coil 4. The feeding coil 4 is a multilayer body of magnetic layers SH2a, SH2b, and SH2c and non-magnetic layers SHla and SH1b. A plurality of linear conductors are disposed on the magnetic layer SH2c and non-magnetic layer SH1a. The magnetic layers SH2a, SH2b, and SH2c have via conductors connecting the linear conductors. Those linear conductors and via conductors are coil conductors in the feeding coil 4. Input and output terminals 43 and 44 and a coupling-line connection terminal 42 are disposed on a lower surface of the non-magnetic layer SH1a. The magnetic layers SH2a, SH2b, and SH2c and non-magnetic layer SHla have via conductors connecting end portions of the linear conductors on both outer side portions among the plurality of linear conductors disposed on the magnetic layer SH2c to the input and output terminals 43 and 44. In that way, the feeding coil 4 is formed as a chip component, and the terminals 42, 43, and 44 on the lower surface are connected to the terminals 22, 23, and 24 in the wiring substrate 2 illustrated in Fig. 2. The coupling-line connection terminal 42 in the feeding coil 4 is connected to the terminal 22 in the wiring substrate 2, but is not electrically coupled to the coil conductors. As described above, because the terminal 22 is contiguous to the coupling line 21, high strength of close contact with the wiring substrate 2 can be achieved.

The coil conductors in the feeding coil 4 and the coupling line 21 are magnetic-field coupled to each other. In Fig. 1, a magnetic flux φ indicates that magnetic-field coupling. As illustrated in Fig. 1, the winding axis of the feeding coil 4 is parallel to a surface of the wiring substrate 2 and is substantially perpendicular to the portion in the coupling line 21 near the feeding coil 4. The line width of the coupling line 21 is smaller than a coil winding width TW of the feeding coil 4. Thus, the magnetic flux passing through the coil aperture of the feeding coil 4 efficiently circulates around the coupling line 21, and the coupling between the coil conductors in the feeding coil 4 and the coupling line 21 can be enhanced.

The conductive member 1, coupling line 21, and connecting conductors 3A and 3B form a current path. In transmission from the antenna device 101A, a current flows through that current path. That is, a current flows (is distributed) as indicated by the solid-line arrows in Fig. 1 in the conductive member 1 through the connecting conductors 3A and 3B. In particular, the current focuses along the edge of the conductor aperture 11. This results in generation of a magnetic field indicated by the broken-line arrows and thick arrow in Fig. 1. That magnetic field enables magnetic-field coupling to an antenna on a communication partner side. In reception at the antenna device 101A, a current induced in the conductive member 1 is extracted in the locations where the connecting conductors 3A and 3B are connected.

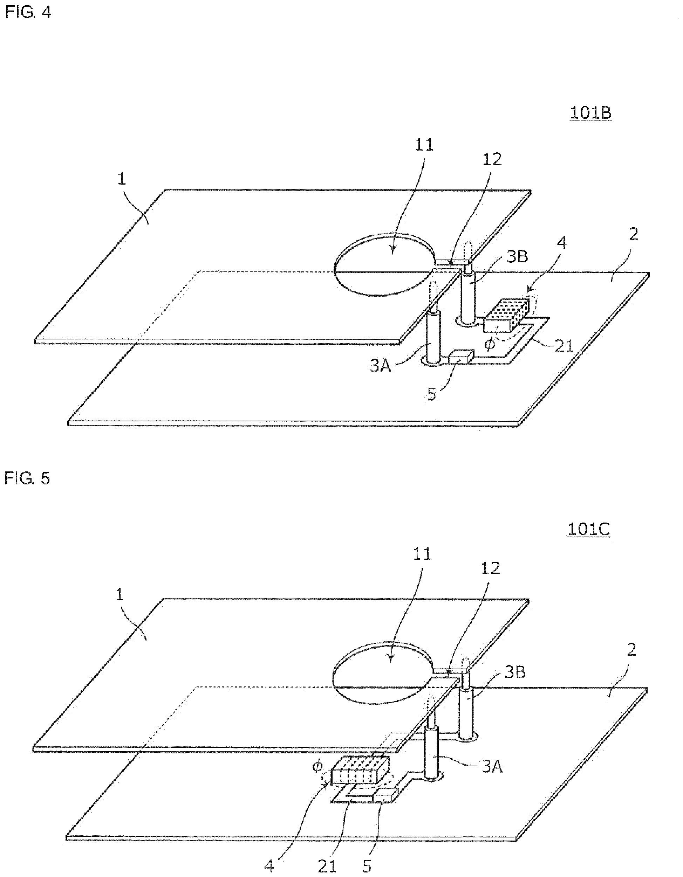

Fig. 4 is a perspective view of another antenna device 101B according to the first embodiment. It differs from the antenna device 101A illustrated in Fig. 1 in the location where the feeding coil 4 is arranged. In the antenna device 101B, the winding axis of the feeding coil 4 is parallel to a surface of the wiring substrate 2 and is substantially perpendicular to the portion in the coupling line 21 near the feeding coil 4. Thus, as with the antenna device 101A, the feeding coil 4 and coupling line 21 are magnetic-field coupled to each other.

Fig. 5 is a perspective view of yet another antenna device 101C according to the first embodiment. It differs from the antenna devices 101A and 101B illustrated in the first embodiment in the location where the coupling line 21, feeding coil 4, and chip capacitor 5 are arranged. The feeding coil 4 overlaps the conductive member 1 as seen in plan view.

In the antenna device 101C, the winding axis of the feeding coil 4 is parallel to a surface of the wiring substrate 2 and is substantially perpendicular to the portion in the coupling line 21 near the feeding coil 4. Thus, as with the antenna devices 101A and 101B, the feeding coil 4 and coupling line 21 are magnetic-field coupled to each other.

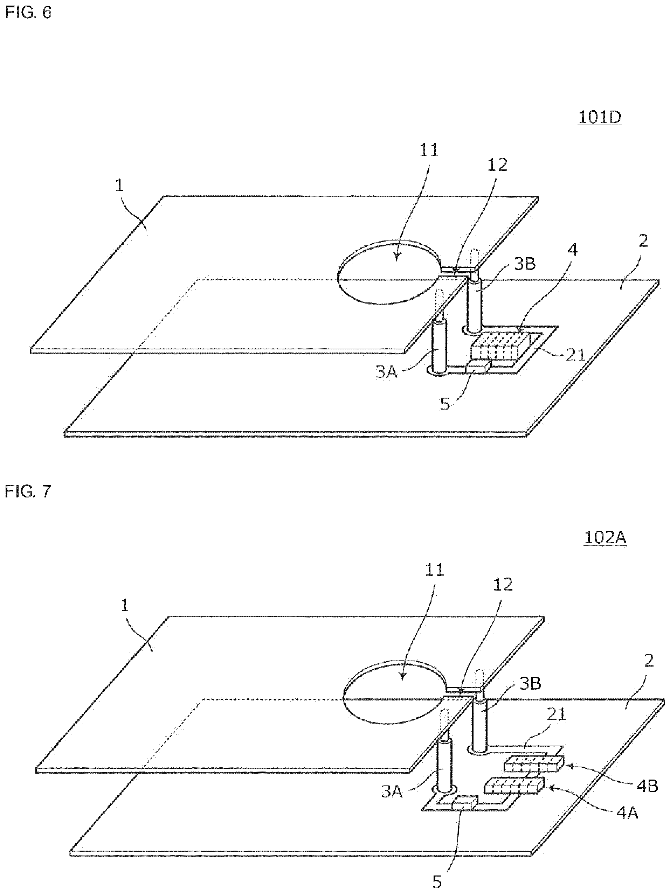

Fig. 6 is a perspective view of still another antenna device 101D according to the first embodiment. It differs from the antenna device 101A illustrated in Fig. 1 in the location where the feeding coil 4 is arranged. In the antenna device 101D, the feeding coil 4 and coupling line 21 do not overlap each other as seen in plan view. The winding axis of the feeding coil 4 is substantially perpendicular to the coupling line 21. Thus, as with the antenna device 101A and other devices, the feeding coil 4 and coupling line 21 are magnetic-field coupled to each other.

As in the above-described some examples, the feeding coil 4 is arranged in a location where it is magnetic-field coupled to the coupling line 21. Accordingly, the feeding coil 4 can be mounted on the wiring substrate 2 without being restricted by the positional relationship with the conductive member 1 and cut portion (conductor aperture 11, slit 12). By setting the location where the feeding coil 4 is arranged, the degree of coupling to the coupling line 21 can be optimized. Because the feeding coil 4 can be coupled to the coupling line 21 in the state where they are near each other, the coupling can be stronger, in comparison with a case where the coupling is based on the conductive member 1 and cut portion (11, 12). Because the coupling line 21 is a conductive pattern and is thin, linkage of a magnetic flux generated from the feeding coil 4 can easily occur and the coupling can be strong. Because the feeding coil 4 and coupling line 21 can be strongly coupled to each other, in comparison with the case where the feeding coil 4 is coupled to the conductive member 1 and cut portion (11, 12), a smaller coil with low inductance, a coil in which radiation of a magnetic flux for coupling is weak, or the like can also be used as the feeding coil 4.

There is a configuration in which a secondary coil in a transformer is electrically and directly connected in series to the coupling line 21 and a primary coil in the transformer is connected to a feeder circuit. In that configuration, because of the secondary coil inside the transformer and a magnetic material in the transformer, the ratio of inductance of the coupling line 21 to inductance of the conductive member 1 is high. When the ratio of inductance of the coupling line is high, the performance of the conductive member 1 as a radiating element degrades. In contrast, according to the present embodiment, because the inductance of the coupling line 21 can be reduced, inductance contributed to coupling to the antenna on the communication partner side can be increased. Because the degree of coupling between the feeder circuit and the antenna device (conductive member 1) depends on the structure of the transformer, it is difficult to adjust the degree of coupling to obtain the optimal performance. According to the present embodiment, the degree of coupling to obtain the optimal performance can be easily set by the location where the feeding coil is arranged with respect to the coupling line. In addition, because it is not necessary to join to the coupling line by, for example, soldering, high reliability can be achieved.

There is another configuration in which the conductive member 1 and wiring substrate 2 are electrically coupled to each other at a predetermined location with a spring pin interposed therebetween, the feeding coil is mounted in the vicinity of the spring pin on the wiring substrate, the spring pin and the feeding coil are magnetic-field coupled to each other, and thus electricity is fed into the conductive member. In that configuration, the location where the feeding coil is mounted is limited to the vicinity of the spring pin, and the feeding coil for being strongly magnetic-field coupled to the spring pin has a low degree of flexibility in its winding direction.

### <<Second Embodiment>>

Fig. 7 is a perspective view of an antenna device 102A according to a second embodiment. The antenna device 102A includes a conductive member 1 and a wiring substrate 2. A coupling line 21 having conductivity is disposed on the wiring substrate 2. The conductive member 1 and coupling line 21 are electrically connected to each other with connecting conductors 3A and 3B interposed therebetween. Two feeding coils 4A and 4B magnetic-field coupled to the coupling line 21 are mounted on the wiring substrate 2. The wiring substrate 2 is connected to a chip capacitor 5 connected in series to the coupling line 21.

The configuration of each of the feeding coils 4A and 4B is illustrated in Fig. 3. The two feeding coils 4A and 4B are connected in series or parallel to each other and connected to the feeder circuit.

In an analogous fashion, three feeding coils may be disposed. It is important to set the polarities such that the plurality of feeding coils do not form a closed loop of a magnetic flux. Owing to the use of the plurality of feeding coils in that way, the coupling between the antenna device and feeder circuit can be easily enhanced. In the case of series connection, the size of each of the feeding coils 4A and 4B can be reduced, and space in the locations where the feeding coils are arranged can be effectively utilized. In the case of parallel connection, a loss in the conductors can be reduced, and the antenna characteristics can be enhanced.

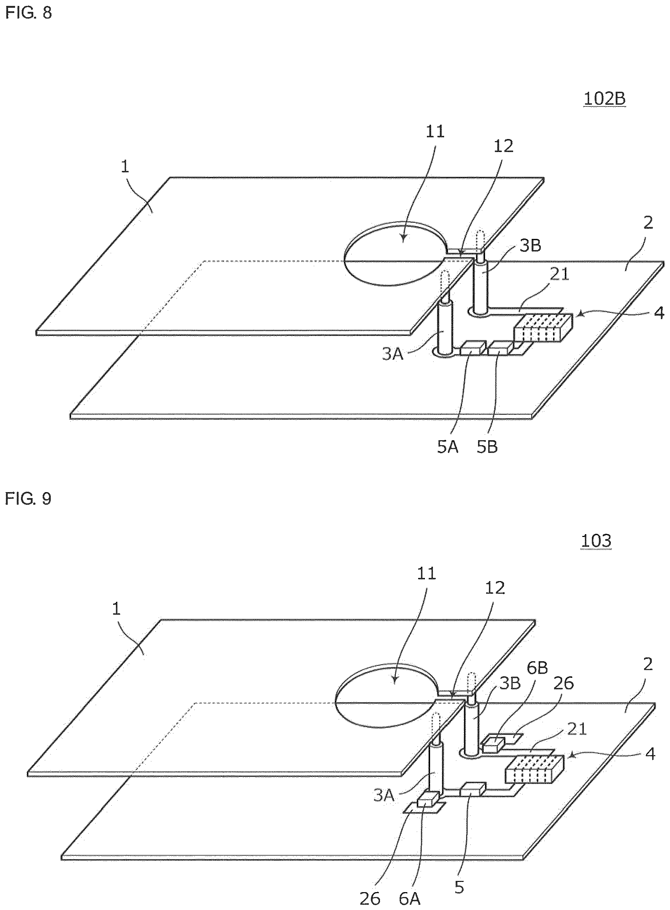

Fig. 8 is a perspective view of another antenna device 102B according to the second embodiment. Unlike the example illustrated in Fig. 1, two chip capacitors 5A and 5B are connected in series to the coupling line 21.

When the antenna device 102B is used in a HF band, for example, typically, several thousand pF, at which withstand voltage is low, is needed. In communication, coupling to an antenna on a partner side may cause a relatively high voltage on the order of, for example, AC 20 volts to be applied to the antenna device 102B. As in the present embodiment, the use of a plurality of chip capacitors connected in series makes a voltage applied to each of the capacitors low, and therefore, low withstand voltage chip components can be used. In an analogous fashion, three or more chip capacitors may be disposed.

The plurality of chip capacitors may be connected in parallel. This leads to a high degree of flexibility in setting a combined capacitance and allows finely setting a resonant frequency of the antenna device.

### <<Third Embodiment>>

Fig. 9 is a perspective view of an antenna device 103 according to a third embodiment. The antenna device 103 includes a conductive member 1 and a wiring substrate 2. A coupling line 21 having conductivity is disposed on the wiring substrate 2. The conductive member 1 and coupling line 21 are electrically connected to each other with connecting conductors 3A and 3B interposed therebetween. A feeding coil 4 magnetic-field coupled to the coupling line 21 is mounted on the wiring substrate 2. The wiring substrate 2 is connected to a chip capacitor 5 connected in series to the coupling line 21.

Ground patterns 26 are disposed on the wiring substrate 2. Chip capacitors 6A and 6B are disposed between the ground patterns 26 and coupling line 21. The ground patterns 26 are positioned in the vicinity of the locations where the connecting conductors 3A and 3B and coupling line 21 are connected.

The chip capacitors 6A and 6B are capacitance that can be considered equivalently open at a frequency of communication signals used in communication by the antenna device 103 (e.g., 13.56 MHz) and can be considered equivalently short at frequencies for other systems (e.g., UHF band). Accordingly, in the other systems, the base portions of the connecting conductors 3A and 3B are grounded to the ground with the chip capacitors 6A and 6B interposed therebetween.

In the above-described configuration, the conductive member 1 is grounded in a high-frequency manner, the potential of the conductive member 1 is stabilized, and the electrostatic shielding effect is increased. Thus, the influences on the other systems can be minimized. In particular, in a state where the antenna device 103 is embedded in a communication terminal device or the like together with a UHF-band antenna for data communication or conversation, adverse influence on the communications in the UHF band is small.

### <<Fourth Embodiment>>

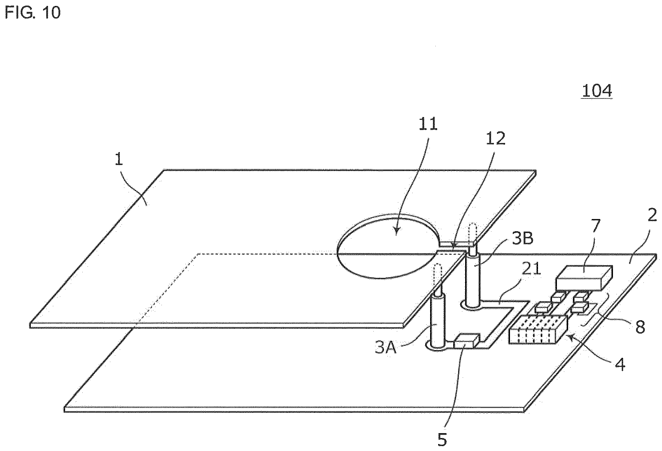

Fig. 10 is a perspective view of an antenna device 104 according to a fourth embodiment. The antenna device 104 includes a conductive member 1 and a wiring substrate 2. A coupling line 21 having conductivity is disposed on the wiring substrate 2. The conductive member 1 and coupling line 21 are electrically connected to each other with connecting conductors 3A and 3B interposed therebetween. A feeding coil 4 magnetic-field coupled to the coupling line 21 is mounted on the wiring substrate 2. The wiring substrate 2 is connected to a chip capacitor 5 connected in series to the coupling line 21. In addition, the wiring substrate 2 is connected to an RFIC 7 and matching circuit components constituting a matching circuit 8.

As in that example, the RFIC 7 constituting the feeder circuit and the matching circuit may be disposed on the wiring substrate 2 on which the coupling line 21 is disposed. This enables the antenna device integral with the feeder circuit.

### <<Fifth Embodiment>>

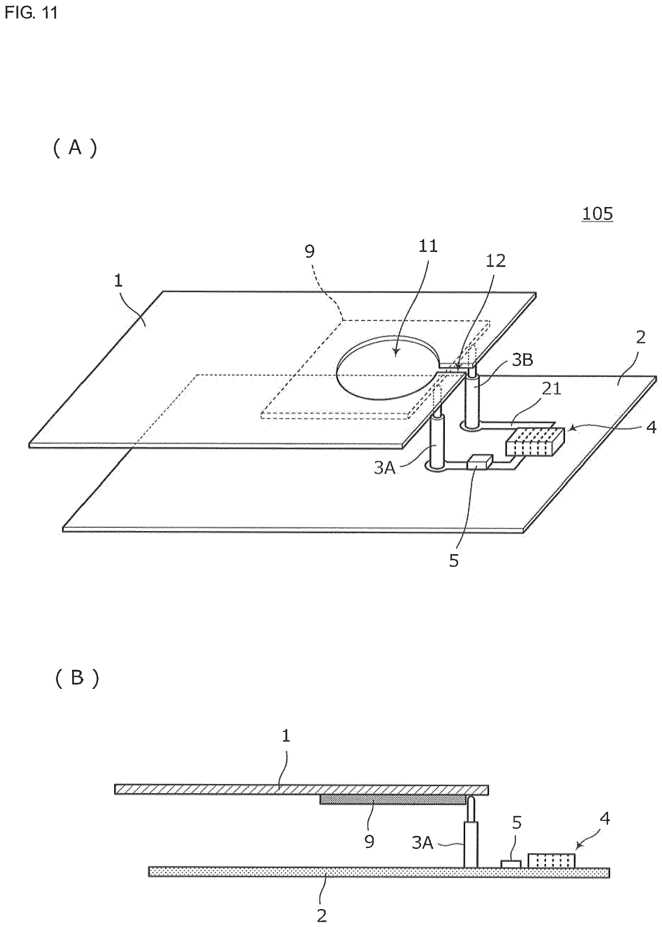

Fig. 11(A) is a perspective view of an antenna device 105 according to a fifth embodiment, and Fig. 11(B) is a front view of the antenna device 105. The antenna device 105 is embedded in a portable antenna device or the like. The antenna device 105 includes a conductive member 1 and a wiring substrate 2. A coupling line 21 having conductivity is disposed on the wiring substrate 2. The conductive member 1 and coupling line 21 are electrically connected to each other with connecting conductors 3A and 3B interposed therebetween.

A feeding coil 4 magnetic-field coupled to the coupling line 21 is mounted on the wiring substrate 2. The wiring substrate 2 is connected to a chip capacitor 5 connected in series to the coupling line 21.

A magnetic sheet 9, such as a ferrite sheet, is attached to a back side of the conductive member 1. The magnetic sheet 9 is positioned in a location that covers the vicinity of the cut portion (conductor aperture 11 and slit 12), that is, a portion where a current density (magnetic field strength) is high.

With the above-described configuration, of the inductance occurring in the conductive member 1, in particular, inductance contributed to coupling to an antenna on a communication partner side increases. This improves the communication performance.

Without the magnetic sheet 9, a magnetic field produced by a current flowing along the cut portion in the conductive member 1 induces an eddy current in a ground electrode on the wiring substrate 2, and this reduces the action of the conductive member 1 as a radiating element. In contrast, according to the present embodiment, because the magnetic field produced by the current flowing along the cut portion in the conductive member 1 is shielded by the magnetic sheet 9, an advantage of avoiding problems caused by the eddy current is also obtained.

The magnetic sheet 9 is not limited to the shape covering the cut portion and may have a shape that covers only the periphery of the cut portion, that is, does not cover the conductor aperture 11 or slit 12. When the magnetic sheet 9 has the shape covering only the periphery of the cut portion, the above-described advantage of suppressing the eddy current can be obtained to some degree.

### <<Sixth Embodiment>>

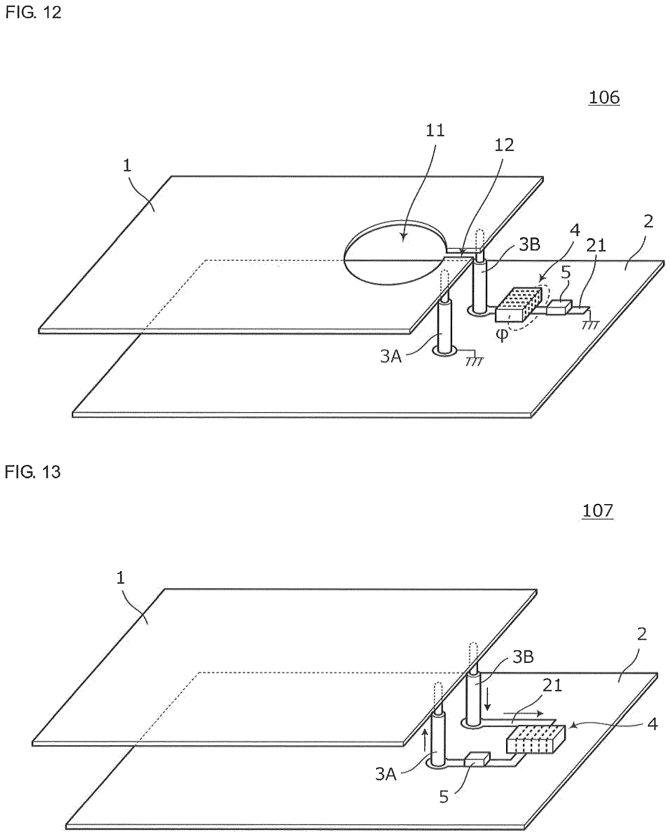

Fig. 12 is a perspective view of an antenna device 106 according to a sixth embodiment. Unlike the antenna devices 101A, 101B, and the like illustrated in the first embodiment, ground conductors are used as a part of the current path. In Fig. 12, a part or end portion of the coupling line 21 is connected to a ground conductor on the wiring substrate 2, and the connecting conductor 3A is also connected to a ground conductor on the wiring substrate 2. Accordingly, the conductive member 1, connecting conductors 3A and 3B, coupling line 21, and ground conductors form a current path.

According to the present embodiment, routing of the coupling line 21 on the wiring substrate 2 is not needed, and a substantial space utilized by the coupling line 21 in the wiring substrate 2 can be reduced. If the ground conductor is disposed over the entire surface of the wiring substrate 2, the conductive member 1 and coupling line 21 can be connected to the ground conductor in any locations in the conductive member 1 with the connecting conductors 3A and 3B interposed therebetween. Accordingly, the flexibility in arrangement of the connecting conductors 3A and 3B, coupling line 21, feeding coil 4, and chip capacitor 5 can be increased. The current path formed by the conductive member 1, connecting conductors 3A and 3B, coupling line 21, and ground conductor can have any shape, and the flexibility in designing relating to radiation characteristics of the antenna device can be increased.

### <<Seventh Embodiment>>

Fig. 13 is a perspective view of an antenna device 107 according to a seventh embodiment. Unlike the antenna devices 101A and 101B illustrated in the first embodiment, the antenna device 107 has neither the conductor aperture 11 nor slit 12 in the conductive member 1.

As described above, the conductor aperture 11 and slit 12 are optional. According to the antenna device 107 in the present embodiment, when the antenna device 107 is in transmission, a magnetic flux is emitted from a loop defined by the current path formed by the coupling line 21, connecting conductors 3A and 3B, and conductive member 1. When the antenna device 107 is in reception, a magnetic flux emitted from an antenna on a communication partner side passes through the loop defined by the current path formed by the coupling line 21, connecting conductors 3A and 3B, and conductive member 1, thus causing the loop of the current path and the antenna on the communication partner side to be coupled to each other.

### <<Eighth Embodiment>>

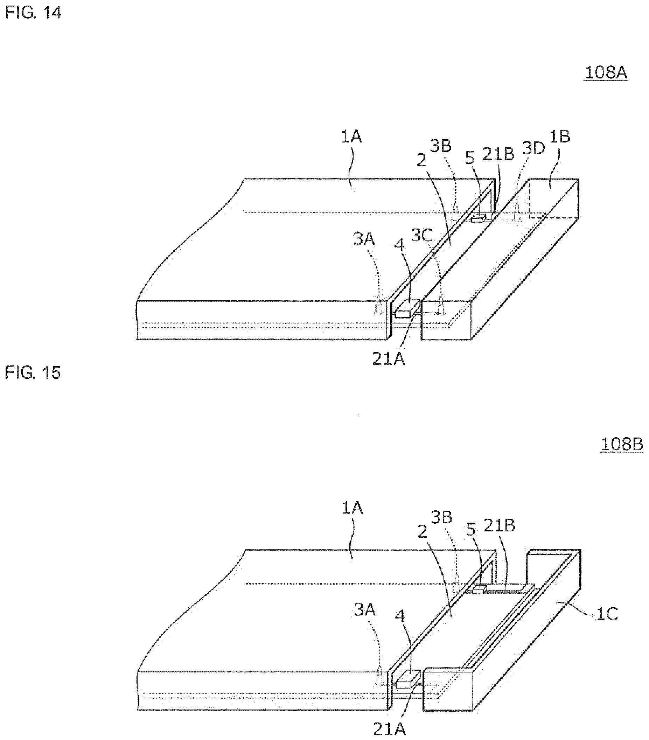

Fig. 14 is a partial perspective view of an antenna device 108A according to an eighth embodiment. The antenna device 108A includes two conductive members 1A and 1B. The conductive members 1A and 1B are a part of a housing for containing a wiring substrate 2. The conductive member 1A constitutes a main portion of the housing, whereas the conductive member 1B constitutes a part of a principal surface and both side surfaces of the housing and constitutes an end face thereof. Coupling lines 21A and 21B are disposed on the wiring substrate 2. A feeding coil 4 is mounted (placed) in a location where it is coupled to the coupling line 21A on the wiring substrate 2. The coupling line 21B is connected in series to a chip capacitor 5. Each of the conductive members 1A and 1B is not limited to the shape illustrated in Fig. 14 and may be a shape in which its corners are rounded.

The coupling lines 21A and 21B are electrically coupled to the conductive member 1A with the connecting conductors 3A and 3B interposed therebetween and are electrically coupled to the conductive member 1B with connecting conductors 3C and 3D interposed therebetween. Accordingly, the coupling lines 21A and 21B and conductive members 1A and 1B form a current path.

Fig. 15 is a partial perspective view of another antenna device 108B according to the eighth embodiment. The antenna device 108B includes two conductive members 1A and 1C. The conductive members 1A and 1C are a part of a housing for containing a wiring substrate 2. The conductive member 1A constitutes a main portion of the housing, whereas the conductive member 1B constitutes a part of both side surfaces of the housing and constitutes an end face thereof. Coupling lines 21A and 21B are disposed on the wiring substrate 2. A feeding coil 4 is mounted (placed) in a location where it is coupled to the coupling line 21A on the wiring substrate 2. The coupling line 21B is connected in series to a chip capacitor 5.

The coupling lines 21A and 21B are electrically coupled to the conductive member 1A with the connecting conductors 3A and 3B interposed therebetween. The coupling lines 21A and 21B are connected to the conductive member 1C. Accordingly, the coupling lines 21A and 21B and conductive members 1A and 1C form a current path.

As described above, a plurality of conductive members may be used in a part of a current path. The conductive members 1A, 1B, and 1C may be a metallic housing in a wireless communication apparatus equipped with the antenna device 108B, for example. A radiating element functioning as a standing-wave antenna for UHF band or the like in a wireless communication apparatus may be used in the conductive members 1B and 1C. The standing-wave antenna is an antenna in which a radiating element resonates and voltage and current standing waves are distributed and from which an electromagnetic wave is emitted. Examples thereof may include a patch antenna, such as an inverted-F antenna, monopole antenna, one-wavelength loop antenna, inverted-L antenna, and planar inverted-F antenna (PIFA), and a slot antenna, and a notch antenna.

### <<Ninth Embodiment>>

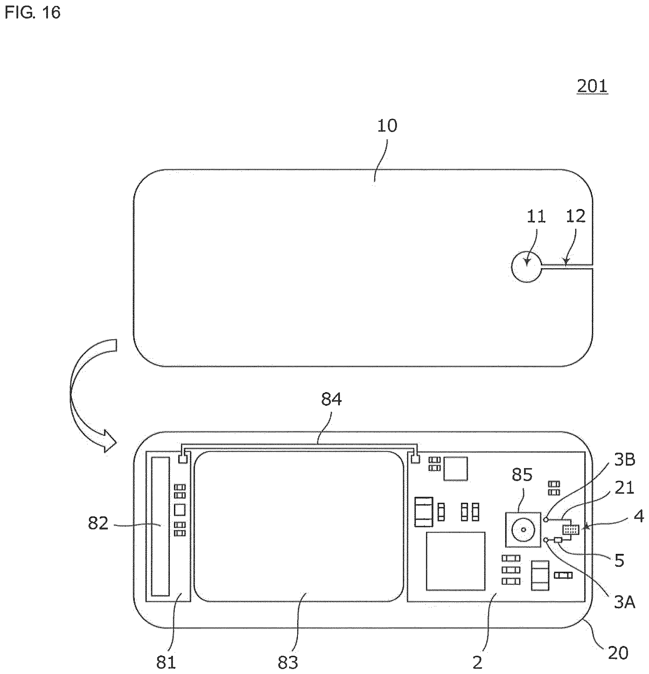

Fig. 16 illustrates a structure of an inner portion of a housing in a wireless communication apparatus 201 according to a sixth embodiment being an example of the antenna device in the present invention and is a plan view in a state where a lower housing 10 and upper housing 20 are separated and the inside is exposed. Wiring substrates 2 and 81, a battery pack 83, and the like are contained in an inner portion of the upper housing 20. A coupling line 21 is disposed on the wiring substrate 2. Connecting conductors 3A and 3B being spring pins, a feeding coil 4, chip capacitor 5, RFIC, and the like are mounted on (connected to) the wiring substrate 2. The wiring substrate 2 is also equipped with a camera module 85 and the like. The wiring substrate 81 is equipped with a UHF antenna 82 and the like. The wiring substrate 2 and wiring substrate 81 are connected to each other with a coaxial cable 84 interposed therebetween.

The lower housing 10 has a conductor aperture 11 and slit 12. The conductor aperture 11 is disposed in a location that faces the above-mentioned camera module 85. The connecting conductors 3A and 3B are in contact with locations between which the slit 12 in the lower housing 10 is positioned in the lower housing 10. Another device, such as a button or speaker, may be arranged in the conductor aperture 11.

In the above-described configuration, the lower housing 10 is acted as a radiating element.

### <<Other Embodiments>>

The above embodiments illustrate examples in which the coupling line 21 is disposed on a front side (surface on which the feeding coil 4 is mounted) of the wiring substrate 2. The coupling line 21 may be disposed on a layer different from the surface on which the feeding coil 4 is mounted. For example, in Fig. 1, the feeding coil 4 may be arranged on a back side of the wiring substrate 2. The wiring substrate 2 may be a multilayer substrate, and the coupling line 21 may be disposed in an inner layer therein.

The above embodiments illustrate examples in which the coil conductors in the feeding coil 4 are magnetic-field coupled to a single line of the coupling line 21. Another configuration may be used in which a planar coil pattern including a plurality of turns is disposed and the coil conductors in the feeding coil 4 are magnetic-field coupled to a plurality of lines of the coupling lines. Another configuration may also be used in which the wiring substrate 2 is a multilayer substrate, the coupling line 21 with a plurality of turns is formed by using a plurality of layers in the wiring substrate, the coil conductors in the feeding coil 4 are magnetic-field coupled to a plurality of lines of the coupling lines.

The above embodiments illustrate examples in which, of the coupling line 21, a portion coupled to the coil conductors in the feeding coil 4 and a portion uncoupled thereto have the same line width. The portions may have different line widths. For example, the inductance and resistance of the coupling line may be reduced by a configuration in which, of the coupling line 21, the portion coupled to the feeding coil 4 has a narrow line width and the portion uncoupled thereto has a wide line width. The inductance and resistance of the coupling line may also be reduced by a configuration in which the number of lines or the number of layers in the portion uncoupled is increased.

The above embodiments illustrate examples in which the coupling line has a U shape. The coupling line is not limited to that shape and may have a simple line segment shape. It may also have a curved shape.

In the above embodiments, the conductor aperture 11 in the conductive member 1 is an aperture that faces the camera module. An aperture for an operation button on a side surface of the housing or aperture for an earphone jack may also be used as the conductor aperture in the conductive member 1.

The above embodiments illustrate the antenna devices each including the conductive member 1 having the cut portion. The cut portion is optional. The connecting conductors 3A and 3B may be connected to two locations in a conductive member having no cut portion. In that case, because of the edge effect, a current focuses along the edge of the conductive member 1. In transmission, when a distributed current flows in the conductive member 1, a magnetic field is emitted from the conductive member 1. In reception, a current induced in the conductive member 1 is extracted in the locations where the connecting conductors 3A and 3B are connected.

The above embodiments illustrate examples in which spring pins are used as the connecting conductors for connecting the coupling line and conductive member. Those portions may be connected to each other with metal screws, a flexible substrate, cable, or the like interposed therebetween.

### Reference Signs List

- SH1a, SH1b: non-magnetic layer
- SH2a, SH2b, SH2c: magnetic layer
- TW: coil winding width
- 1: conductive member
- 2: wiring substrate
- 2, 81: wiring substrate
- 3A, 3B: connecting conductor
- 4, 4A, 4B: feeding coil
- 5, 5A, 5B: chip capacitor
- 6A, 6B: chip capacitor
- 7: RFIC
- 8: matching circuit
- 9: magnetic sheet
- 10: lower housing
- 11: conductor aperture
- 12: slit
- (11, 12): cut portion
- 20: upper housing
- 21, 21A, 21B: coupling line
- 22, 23, 24: terminal
- 26: ground pattern
- 40: coil conductor
- 42: coupling-line connection terminal
- 43, 44: input and output terminal
- 81: wiring substrate
- 82: UHF antenna
- 83: battery pack
- 84: coaxial cable
- 85: camera module
- 101: antenna device
- 101A - 101D: antenna device
- 102A, 102B: antenna device
- 103 - 108A, 108B: antenna device
- 201: wireless communication apparatus

## Claims

1. An antenna device comprising:
a conductive member (1, 1A, 1B, 1C);
a wiring substrate (2, 81) including a coupling line (21, 21A, 21B) being a member that has conductivity and that is different from the conductive member (1, 1A, 1B, 1C);
a connecting conductor (3A- 3D) electrically connecting the conductive member (1, 1A, 1B, 1C) and the coupling line (21, 21A, 21B); and
a feeding coil (4, 4A, 4B) disposed on the wiring substrate (2, 81) and magnetic-field coupled to the coupling line (21, 21A, 21B),
wherein at least the conductive member (1, 1A, 1B, 1C), the coupling line (21, 21A, 21B), and the connecting conductor (3A- 3D) form a current path.

2. The antenna device according to Claim 1, wherein an end of the coupling line (21, 21A, 21B) is connected to a ground electrode, and at least the conductive member (1, 1A, 1B, 1C), the connecting conductor (3A - 3D), the coupling line (21, 21A, 21B), and the ground electrode form the current path.

3. The antenna device according to Claim 1 or 2, wherein the conductive member (1) has a cut portion (11, 12), and the connecting conductor (3A, 3B) is one of a plurality of connecting conductors in locations between which the cut portion (11, 12) is positioned.

4. The antenna device according to Claim 3, further comprising a magnetic sheet (9) that covers a vicinity of the cut portion (11, 12) in the conductive member (1).

5. The antenna device according to any one of Claims 1 to 4, wherein the wiring substrate (2, 81) is equipped with a capacitor (5, 5A, 5B) connected to the coupling line (21, 21A, 21B).

6. The antenna device according to any one of Claims 1 to 5, wherein a winding axis of the feeding coil (4, 4A, 4B) is substantially parallel to a surface of the wiring substrate (2, 81).

7. The antenna device according to any one of Claims 1 to 6, wherein at least a part of the coupling line (21, 21A, 21B) is substantially perpendicular to the winding axis of the feeding coil (4, 4A, 4B) in a vicinity of the feeding coil (4, 4A, 4B).

8. The antenna device according to any one of Claims 1 to 7, wherein a capacitor (6A, 6B) connected to the connecting conductor (3A - 3D) and configured to allow high-frequency signals to be transmitted directly to ground is disposed on the wiring substrate (2, 81).

9. The antenna device according to any one of Claims 1 to 8, wherein the feeding coil (4, 4A, 4B) includes a coupling-line connection terminal isolated from an input and output terminal (42) in the feeding coil (4, 4A, 4B), and the coupling-line connection terminal (42) in the feeding coil (4, 4A, 4B) is soldered to the coupling line (21, 21A, 21B).

10. The antenna device according to any one of Claims 1 to 9, wherein the wiring substrate (2, 81) is a multilayer substrate, and the coupling line (21, 21A, 21B) is disposed on a layer different from a surface on which the feeding coil (4, 4A, 4B) is mounted.

11. The antenna device according to any one of Claims 1 to 10, wherein a feeder circuit (7) connected to the feeding coil (4, 4A, 4B) is disposed on the wiring substrate (2, 81).

12. The antenna device according to any one of Claims 1 to 11, wherein a width of the coupling line (21, 21A, 21B) is smaller than a coil winding width of the feeding coil (4, 4A, 4B), and when the conductive member (1, 1A, 1B, 1C) is seen in plan view, a width of the conductive member (1, 1A, 1B, 1C) is larger than the coil winding width of the feeding coil (4, 4A, 4B).

13. An electronic apparatus comprising an antenna device according to claim 1.

14. The electronic apparatus according to Claim 13, wherein the conductive member (1A, 1B, 1C) is a part of a housing for containing the wiring substrate (2, 81).

## Patentansprüche

1. Eine Antennenvorrichtung, die folgende Merkmale aufweist:
ein leitfähiges Bauglied (1, 1A, 1B, 1C);
ein Verdrahtungssubstrat (2, 81), das eine Kopplungsleitung (21, 21A, 21B) umfasst, die ein Bauglied ist, das Leitfähigkeit aufweist und von dem leitfähigen Bauglied (1, 1A, 1B, 1C) verschieden ist;
einen Verbindungsleiter (3A-3D), der das leitfähige Bauglied (1, 1A, 1B, 1C) und die Kopplungsleitung (21, 21A, 21B) elektrisch verbindet; und
eine Zuführspule (4, 4A, 4B), die auf dem Verdrahtungssubstrat (2, 81) angeordnet ist und mit der Kopplungsleitung (21, 21A, 21B) mittels eines Magnetfelds gekoppelt ist,
wobei zumindest das leitfähige Bauglied (1, 1A, 1B, 1C), die Kopplungsleitung (21, 21A, 21B) und der Verbindungsleiter (3A-3D) einen Stromweg bilden.

2. Die Antennenvorrichtung gemäß Anspruch 1, bei der ein Ende der Kopplungsleitung (21, 21A, 21B) mit einer Masseelektrode verbunden ist und zumindest das leitfähige Bauglied (1, 1A, 1B, 1C), der Verbindungsleiter (3A-3D), die Kopplungsleitung (21, 21A, 21B) und die Masseelektrode den Stromweg bilden.

3. Die Antennenvorrichtung gemäß Anspruch 1 oder 2, bei der das leitfähige Bauglied (1) einen Schnittabschnitt (11, 12) aufweist und der Verbindungsleiter (3A, 3B) einer einer Mehrzahl von Verbindungsleitern an Orten ist, zwischen denen der Schnittabschnitt (11, 12) positioniert ist.

4. Die Antennenvorrichtung gemäß Anspruch 3, die ferner eine magnetische Lage (9) aufweist, die eine Umgebung des Schnittabschnitts (11, 12) in dem leitfähigen Bauglied (1) bedeckt.

5. Die Antennenvorrichtung gemäß einem der Ansprüche 1 bis 4, bei der das Verdrahtungssubstrat (2, 81) mit einem Kondensator (5, 5A, 5B) ausgestattet ist, der mit der Kopplungsleitung (21, 21A, 21B) verbunden ist.

6. Die Antennenvorrichtung gemäß einem der Ansprüche 1 bis 5, bei der eine Wickelachse der Zuführspule (4, 4A, 4B) im Wesentlichen parallel zu einer Oberfläche des Verdrahtungssubstrats (2, 81) ist.

7. Die Antennenvorrichtung gemäß einem der Ansprüche 1 bis 6, bei der zumindest ein Teil der Kopplungsleitung (21, 21A, 21B) im Wesentlichen senkrecht zu der Wickelachse der Zuführspule (4, 4A, 4B) in einer Umgebung der Zuführspule (4, 4A, 4B) ist.

8. Die Antennenvorrichtung gemäß einem der Ansprüche 1 bis 7, bei der ein Kondensator (6A, 6B), der mit dem Verbindungsleiter (3A-3B) verbunden und dazu konfiguriert ist, ein direktes Übertragen von Hochfrequenzsignalen an Masse zuzulassen, auf dem Verdrahtungssubstrat (2, 81) angeordnet ist.

9. Die Antennenvorrichtung gemäß einem der Ansprüche 1 bis 8, bei der die Zuführspule (4, 4A, 4B) einen Kopplungsleitung-Verbindungsanschluss aufweist, der von einem Eingangs- und Ausgangsanschluss (42) in der Zuführspule (4, 4A, 4B) isoliert ist, und der Kopplungsleitung-Verbindungsanschluss (42) in der Zuführspule (4, 4A, 4B) auf die Kopplungsleitung (21, 21A, 21B) gelötet ist.

10. Die Antennenvorrichtung gemäß einem der Ansprüche 1 bis 9, bei der das Verdrahtungssubstrat (2, 81) ein Mehrschichtensubstrat ist und die Kopplungsleitung (21, 21A, 21B) auf einer Schicht angeordnet ist, die sich von einer Oberfläche unterscheidet, auf der die Zuführspule (4, 4A, 4B) befestigt ist.

11. Die Antennenvorrichtung gemäß einem der Ansprüche 1 bis 10, bei der eine Zuführschaltung (7), die mit der Zuführspule (4, 4A, 4B) verbunden ist, auf dem Verdrahtungssubstrat (2, 81) angeordnet ist.

12. Die Antennenvorrichtung gemäß einem der Ansprüche 1 bis 11, bei der eine Breite der Kopplungsleitung (21, 21A, 21B) kleiner als eine Spulenwicklungsbreite der Zuführspule (4, 4A, 4B) ist und, wenn das leitfähige Bauglied (1, 1A, 1B, 1C) in Draufsicht betrachtet wird, eine Breite des leitfähigen Bauglieds (1, 1A, 1B, 1C) größer als die Spulenwicklungsbreite der Zuführspule (4, 4A, 4B) ist.

13. Ein elektronischer Apparat, der eine Antennenvorrichtung gemäß Anspruch 1 aufweist.

14. Der elektronische Apparat gemäß Anspruch 13, bei dem das leitfähige Bauglied (1, 1A, 1B, 1C) ein Teil eines Gehäuses zum Enthalten des Verdrahtungssubstrats (2, 81) ist.

## Revendications

1. Dispositif d'antenne comprenant :
un élément conducteur (1, 1A, 1B, 1C) ;
un substrat de câblage (2, 81) comprenant une ligne de couplage (21, 21A, 21B) qui est un élément doté de conductivité et différent de l'élément conducteur (1, 1A, 1B, 1C) ;
un conducteur de liaison (3A à 3D) reliant électriquement l'élément conducteur (1, 1A, 1B, 1C) et la ligne de couplage (21, 21A, 21B) ; et
une bobine d'alimentation (4, 4A, 4B) disposée sur le substrat de câblage (2, 81) et couplée par un champ magnétique à la ligne de couplage (21, 21A, 21B),
dans lequel au moins l'élément conducteur (1, 1A, 1B, 1C), la ligne de couplage (21, 21A, 21B) et le conducteur de liaison (3A à 3D) forment un trajet de courant.

2. Dispositif d'antenne selon la revendication 1, dans lequel une extrémité de la ligne de couplage (21, 21A, 21B) est reliée à une électrode de terre, et au moins l'élément conducteur (1, 1A, 1B, 1C), le conducteur de liaison (3A à 3D), la ligne de couplage (21, 21A, 21B) et l'électrode de terre forment le trajet de courant.

3. Dispositif d'antenne selon les revendications 1 ou 2, dans lequel l'élément conducteur (1) présente une partie découpée (11, 12), et le conducteur de liaison (3A, 3B) est l'un d'une pluralité de conducteurs de liaison situés à des emplacements entre lesquels se trouve la partie découpée (11, 12).

4. Dispositif d'antenne selon la revendication 3, comprenant en outre une feuille magnétique (9) qui couvre les alentours de la partie découpée (11, 12) de l'élément conducteur (1).

5. Dispositif d'antenne selon l'une quelconque des revendications 1 à 4, dans lequel le substrat de câblage (2, 81) est équipé d'un condensateur (5, 5A, 5B) relié à la ligne de couplage (21, 21A, 21B).

6. Dispositif d'antenne selon l'une quelconque des revendications 1 à 5, dans lequel un axe d'enroulement de la bobine d'alimentation (4, 4A, 4B) est sensiblement parallèle à une surface du substrat de câblage (2, 81).

7. Dispositif d'antenne selon l'une quelconque des revendications 1 à 6, dans lequel au moins une partie de la ligne de couplage (21, 21A, 21B) est sensiblement perpendiculaire à l'axe d'enroulement de la bobine d'alimentation (4, 4A, 4B) à proximité de la bobine d'alimentation (4, 4A, 4B).

8. Dispositif d'antenne selon l'une quelconque des revendications 1 à 7, dans lequel un condensateur (6A, 6B) relié au conducteur de liaison (3A à 3D) et configuré pour permettre que des signaux haute fréquence soient transmis directement à la terre est disposé sur le substrat de câblage (2, 81).

9. Dispositif d'antenne selon l'une quelconque des revendications 1 à 8, dans lequel la bobine d'alimentation (4, 4A, 4B) comprend une borne de liaison de ligne de couplage isolée d'une borne d'entrée et de sortie (42) de la bobine d'alimentation (4, 4A, 4B), et la borne de liaison de ligne de couplage (42) de la bobine d'alimentation (4, 4A, 4B) est soudée à la ligne de couplage (21, 21A, 21B).

10. Dispositif d'antenne selon l'une quelconque des revendications 1 à 9, dans lequel le substrat de câblage (2, 81) est un substrat à couches multiples, et la ligne de couplage (21, 21A, 21B) est disposée sur une couche différente d'une surface sur laquelle est montée la bobine d'alimentation (4, 4A, 4B).

11. Dispositif d'antenne selon l'une quelconque des revendications 1 à 10, dans lequel un circuit d'alimentation (7) relié à la bobine d'alimentation (4, 4A, 4B) est disposé sur le substrat de câblage (2, 81).

12. Dispositif d'antenne selon l'une quelconque des revendications 1 à 11, dans lequel une largeur de la ligne de couplage (21, 21A, 21B) est inférieure à une largeur d'enroulement de bobine de la bobine d'alimentation (4, 4A, 4B), et lorsque l'élément conducteur (1, 1A, 1B, 1C) est vu de dessus, une largeur de l'élément conducteur (1, 1A, 1B, 1C) est supérieure à la largeur d'enroulement de bobine de la bobine d'alimentation (4, 4A, 4B).

13. Appareil électronique comprenant un dispositif d'antenne selon la revendication 1.

14. Appareil électronique selon la revendication 13, dans lequel l'élément conducteur (1A, 1B, 1C) fait partie d'un boîtier destiné à contenir le substrat de câblage (2, 81).
